(19) Europäisches Patentamt
European Patent Office
Office européen des brevets

(11) Publication number: **0 065 401**
**B1**

# (12) EUROPEAN PATENT SPECIFICATION

(45) Date of publication of patent specification: **15.01.86**

(21) Application number: **82302367.6**

(22) Date of filing: **10.05.82**

(51) Int. Cl.$^4$: **C 01 B 33/28,** C 01 B 33/20, C 01 B 35/10, C 01 G 17/00, C 01 G 28/02, C 01 G 30/02, C 01 G 31/00, C 01 G 37/14, C 01 G 39/00, C 01 G 45/12, C 01 G 49/00

## (54) Zeolites.

(30) Priority: **20.05.81 GB 8115407**

(43) Date of publication of application:
**24.11.82 Bulletin 82/47**

(45) Publication of the grant of the patent:
**15.01.86 Bulletin 86/03**

(84) Designated Contracting States:
**DE FR GB NL**

(56) References cited:
**EP-A-0 034 727**
**EP-A-0 041 621**
**EP-A-0 046 504**
**FR-A-2 387 908**
**US-A-4 108 881**

(73) Proprietor: **IMPERIAL CHEMICAL INDUSTRIES PLC**
**Imperial Chemical House Millbank**
**London SW1P 3JF (GB)**

(72) Inventor: **Whittam, Thomas Vincent**
**30 Wilton Drive**
**Darlington Cleveland (US)**

(74) Representative: **Martin, David Lincoln et al**
**Imperial Chemical Industries PLC Legal Department: Patents PO Box 6 Bessemer Road**
**Welwyn Garden City Herts, AL7 1HD (GB)**

**EP 0 065 401 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a zeolite material, hereinafter referred to as zeolite Nu-4, to a method of making it and to processes using it as a catalyst.

According to the present invention, we provide a synthetic zeolite material, designated zeolite Nu-4, having a molar composition expressed by the formula:

$$0.1 \text{ to } 7.5\ M_2O:0.2 \text{ to } 2.5\ Y_2O_3:100\ XO_2:0 \text{ to } 50\ H_2O$$

wherein M is a monovalent cation or 1/n of a cation of valency n, X is silicon or germanium, Y is aluminium, iron, chromium, vanadium, molybdenum, arsenic, antimony, manganese, gallium or boron, and $H_2O$ is water of hydration additional to water notionally present when M is H, and having an X-ray pattern substantially as set out in Table 1 (as determined by standard technique using Kα radiation). Table 1 shows X-ray data for zeolite Nu-4 as prepared. The X-ray pattern is little affected by the type of cation present or by calcination or hydration.

TABLE 1

| Zeolite Nu-4 Example 3 (As made) | | Zeolite Nu-4 Example 4 (Calcined H form) | |
|---|---|---|---|
| dA | 100 $I/I_o$ | dA | 100 $I/I_o$ |
| 11.3 | 16 | — | — |
| 11.1 | 20 | 11.07 | 33 |
| 10.08 | 15 | 10.07 | 36 |
| 9.90 | 8 | 9.96 | 10 |
| 9.77 | 6 | 9.79 | 10 |
| — | — | 9.28 | 1 |
| 9.05 | 1 | 9.02 | 1.5 |
| — | — | 8.08 | 1 |
| 7.50 | 2 | 7.45 | 4 |
| 7.09 | 1 | 7.09 | 2 |
| 6.78 | 2 | 6.72 | 4 |
| 6.44 | 5 | 6.38 | 8 |
| 6.07 | 4 | 6.08 | 5 |
| 6.05 | 5 | 6.02 | 7 |
| 5.97 | 1 | 5.99 | 7 |
| 5.75 | 8 | 5.73 | 9 |
| 5.65 | 6 | 5.57 | 8 |
| 5.63 | 2 | — | — |
| 5.41 | 2 | 5.38 | 2 |
| 5.19 | 2 | 5.15 | 4 |
| 5.07 | 2 | 5.04 | 3 |

TABLE 1 (cont.).

| Zeolite Nu-4 Example 3 (As made) dA | 100 $I/I_o$ | Zeolite Nu-4 Example 4 (Calcined H form) dA | 100 $I/I_o$ |
|---|---|---|---|
| 5.01 | 4 | 5.005 | 5 |
| 4.915 | 1 | 4.899 | 1 |
| — | — | 4.725 | 1 |
| 4.629 | 9 | 4.610 | 9 |
| 4.558 | 1 | 4.560 | 2 |
| 4.495 | 2 | 4.490 | 1 |
| 4.475 | 2 | 4.470 | 2 |
| 4.386 | 13 | 4.380 | 14 |
| 4.291 | 10 | 4.280 | 13 |
| 4.124 | 13 | 4.103 | 3 |
| 4.104 | 4 | — | — |
| 4.039 | 6 | 4.022 | 7 |
| 3.950 | 1 | 3.950 | 2 |
| 3.880 | 100 | — | — |
| 3.850 | 69 | 3.869 | 100 |
| — | — | 3.836 | 73 |
| 3.743 | 51 | 3.764 | 35 |
| 3.730 | 50 | 3.735 | 54 |
| 3.678 | 27 | 3.662 | 29 |
| 3.649 | 22 | 3.604 | 4 |
| 3.629 | 5 | — | — |
| — | — | 3.500 | 5 |
| 3.466 | 12 | 3.469 | 10 |
| 3.364 | 6 | 3.368 | 7 |
| 3.332 | 9 | 3.342 | 10 |
| 3.329 | 4 | — | — |
| 3.273 | 4 | 3.265 | 3 |
| 3.267 | 4 | — | — |
| 3.260 | 4 | 3.260 | 12 |

1Å=0.1 nm

Within the above definition of chemical composition, zeolite Nu-4 appears to be most readily formed in a state of high purity when the number of moles of $Y_2O_3$ is in the range 0.5 to 2.

This definition includes both freshly prepared zeolite Nu-4 ("freshly prepared" means the product of synthesis and washing, with optional drying, as hereinafter described) and also forms of it resulting from dehydration, and/or calcination, and/or ion exchange. In freshly prepared zeolite Nu-4, M may include an alkali metal cation, especially sodium, possibly with ammonium and/or hydrogen and usually, or when prepared from nitrogen compounds, includes nitrogen-containing organic cations as described below or cationic degradation products thereof, or precursors thereof. These nitrogen-containing cations are hereinafter referred to as Q. Whilst potassium or rubidium can be present as alkali metal ions, there is a tendency to form zeolite Nu-10 (described in our co-pending United Kingdom Patent Application No. 8115410, now published as European Patent Application No. 65,400A) as a significant impurity.

The freshly-prepared zeolite Nu-4 may contain nitrogen-containing compounds, typically in the range 0.4 to 6 moles per mole of $XO_2$. Since Nu-4 is a zeolite, the nitrogen-containing base must be physically trapped within the crystal lattice. It can be removed by thermal or oxidative degradation or by displacement by suitable small molecules. This physically trapped basic material does not constitute part of the composition for the purposes of the definition. Thus a zeolite Nu-4 as made typically has the following molar composition:

$$0.1 \text{ to } 7.5\ M_2O : 0.4 \text{ to } 6Q : 0.2 \text{ to } 2.5\ Y_2O_3 : 100\ XO_2 : 0 \text{ to } 50\ H_2O$$

wherein M is an alkali metal or ammonium, or hydrogen.

The $H_2O$ content of freshly prepared zeolite Nu-4 depends on the conditions in which it has been dried after synthesis.

In calcined forms of zeolite Nu-4, M may be alkali metal and possibly hydrogen but includes less or no nitrogen-containing organic compounds, since these are burnt out in the presence of air leaving hydrogen as the other balancing cation, or otherwise displaced prior to calcination.

Among the ion-exchanged forms of zeolite Nu-4, the ammonium ($NH_4^+$) is of importance since it can be readily converted to the hydrogen form by calcination. The hydrogen form can also be prepared directly by exchange with an acid. The hydrogen-form and forms containing metals introduced by ion exchange are described further below.

We believe that zeolite Nu-4 is a new member of the ZSM5/11 series of zeolites, which has the lowest symmetry possible for members of this series. ZSM11 has the highest i.e. has tetragonal symmetry. ZSM5 usually exhibits orthorhombic symmetry, but recently (E L Wu et al J Phys. Chem. *83*, 2777 (1979)) it has been claimed that ZSM5 under special circumstances, can exhibit pseudo monoclinic symmetry. Specific treatments, e.g. $NH_4^+$ exchange, calcination, sorption, can cause displacive transformation from orthorhombic to pseudo monoclinic symmetry. These transformations are completely reversible and in ZSM5 depend only upon the ions or sorbate present within the ZSM5 lattice.

We have found that zeolite Nu-4 as made, or in all its ion exchanged, calcined, hydrated, dehydrated or sorbing forms, always exhibits true monoclinic symmetry. This is best demonstrated by reference to Nature *275*, 120 (1978), where it is noted that the major clue to differences in structure, between the closely related zeolites ZSM5 and ZSM11, came from differences in X-ray diffraction data. In the diffraction data for ZSM5 (orthorhombic) there is a significant splitting of certain ZSM11 (tetragonal) type peaks into doublets and there are variations in peak heights. This behaviour confirms that ZSM5 has a lower order of symmetry than ZSM11, but is nevertheless closely related. In going from tetragonal ZSM5 to pseudo-monoclinic ZSM5 there is further marginal peak splitting. However in the case of zeolite Nu-4 there is very substantial splitting of peaks as compared with tetragonal or even pseudo-monoclinic ZSM5. This splitting includes many new doublets and even triplets, and also marked variations in line intensities. Table 2 compares zeolite Nu-4 with pseudo-monoclinic and tetragonal ZSM5 and also ZSM11. Crystals of zeolite Nu-4 are always characteristically large and prismatic with typical dimensions in the range 3 to 100 mμ. Twinning is a very common feature.

TABLE 2

| Zeolite Nu-4 of Example 3 | | ZSM5+$NH_4$ exchanged pseudomonoclinic | | ZSM5+as made orthorhombic | | ZSM11 φ as made tetragonal | |
|---|---|---|---|---|---|---|---|
| dA | 100 $I/I_o$ | dA | 100 $I/I_o$ | dA | 100 $I/I_o$ | dA | 100 $I/I_o$ |
| 11.3 } D | 16 | 11.2 | 100 | 11.2 | 45 | 11.9 | 27 |
| 11.1 } D | 20 | 10.0 | 70 | 10.0 | 30 | 10.07 | 23 |
| 10.08 } T | 15 | — | — | — | — | — | — |
| 9.90 } T | 8 | 9.71 | 12 | 9.71 | 20 | — | — |
| 9.770 } T | 6 | 9.02 | 1 | 9.02 | 2 | — | — |
| 9.05 | 1 | 8.19 | 1 | — | — | — | — |
| 7.50 | 2 | 7.38 | 2 | 7.38 | 15 | 7.5 | 2 |
| — | — | 7.20 | 1 | 7.20 | 1 | 7.25 | 1 |
| 7.09 | 1 | — | — | — | — | 7.11 | 1 |
| 6.78 | 2 | — | — | — | — | 6.73 | 3 |
| — | — | 6.56 | 15 | 6.56 | 10 | — | — |
| 6.44 | 5 | 6.37 | 15 | 6.37 | 10 | 6.42 | 2 |
| — | — | 6.21 | 21 | 6.21 | 14 | 6.33 | 2 |
| 6.07 } D | 5 | — | — | — | — | — | — |
| 6.05 } D | 5 | 6.03 | 17 | 6.03 } D | 12 | 6.09 } D | 3 |
| 5.97 | 1 | — | — | 5.99 } D | 13 | 6.03 } D | 3 |
| 5.75 | 8 | 5.72 | 12 | 5.72 | 5 | 5.75 | 2 |
| 5.65 } D | 6 | 5.60 | 12 | 5.60 | 28 | 5.61 | 5 |
| 5.63 } D | 2 | — | — | — | — | — | — |
| 5.41 | 2 | — | — | — | — | — | — |
| 5.19 | 2 | 5.22 | 2 | 5.22 | 5 | 5.16 | 1 |
| 5.07 } D | 4 | 5.09 | 3 | 5.09 | 5 | 5.03 | 3 |
| 5.01 } D | 4 | — | — | — | — | — | — |
| — | — | 4.95 } D | 8 | 4.95 | 3 | — | — |
| 4.915 | 1 | 4.93 } D | 8 | — | — | — | — |
| 4.629 | 9 | — | — | — | — | — | — |
| — | — | 4.599 | 1 | — | — | 4.62 | 4 |

TABLE 2 (continued)

| Zeolite Nu-4 of Example 3 | | ZSM5+$NH_4$ exchanged pseudomonoclinic | | ZSM5+as made orthorhombic | | ZSM11 ϕ as made tetragonal | |
|---|---|---|---|---|---|---|---|
| dA | 100 $I/I_o$ | dA | 100 $I/I_o$ | dA | 100 $I/I_o$ | dA | 100 $I/I_o$ |
| 4.558 } T | 1 | 4.55 } D | 5 | 4.55 | 4 | 4.48 | 1 |
| 4.495 } T | 2 | 4.48 } D | 5 | — | — | — | — |
| 4.475 } T | 2 | — | — | — | — | — | — |
| 4.386 | 13 | 4.375 | 8 | 4.375 | 8 | 4.37 | 9 |
| 4.291 | 10 | 4.250 | 2 | 4.250 | 1 | 4.28 | 2 |
| 4.124 } T | 13 | — | — | — | — | — | — |
| 4.104 } T | 4 | — | — | — | — | — | — |
| 4.039 } T | 6 | 4.047 | 2 | 4.047 | 1 | 4.08 | 4 |
| 3.950 | 1 | — | — | — | — | — | — |
| 3.880 } D | 100 | — | — | — | — | — | — |
| 3.860 } D | 69 | 3.867 } D | 88 | 3.867 | 100 | 3.86 | 100 |
| — | — | 3.830 } D | 50 | — | — | — | — |
| 3.743 } D | 51 | 3.74 | 50 | 3.77 } D | 30 | — | — |
| 3.730 } D | 50 | — | — | 3.74 } D | 50 | — | — |
| 3.678 } T | 27 | — | — | — | — | — | — |
| 3.649 } T | 22 | 3.660 } D | 20 | 3.660 | 35 | 3.68 | 5 |
| 3.629 } T | 5 | 3.640 } D | 19 | — | — | — | — |

D=Doublet + From J Phys Chem *83*, (71) p 2777 (1979)
T=Triplet ϕ From US Patent 3,709,979

Further confirmation of differences between zeolite Nu-4 and ZSM5 comes from sorption behaviour. Table 3 gives sorption results which indicate that HNu-4 has a more constrained tunnel network than HZSM5 since both m-xylene and cyclohexane are sorbed much more slowly than in ZSM5.

This sorption data suggests that zeolite Nu-4 may be useful in separating $C_8$ aromatic fractions.

Zeolite Nu-4 has molecular sieve properties analogous to those of known zeolites. Thus zeolite Nu-4 may be characterised by its adsorption capacity for molecules of various sizes. Typical results are shown in Table 3. Slight sorption of cyclohexane and rapid sorption of p-xylene suggest an entry port size of about 6.0 A in diameter. The results given in Table 3 also show that m-xylene is sorbed more slowly than p-xylenes, thereby indicating that zeolite Nu-4 may be used to separate xylene isomers. By comparison with ZSM5 prepared from tetraalkylammonium or hexamethylenediamine, zeolite Nu-4 should be more effective in separating xylene isomers.

TABLE 3
Sorption on HNu-4 (Example 4) and HZSM5 at 25°C

| Zeolite | Form | % Sorption w/w | | | | | | | | | | | | | |
|---|---|---|---|---|---|---|---|---|---|---|---|---|---|---|---|
| | | n-hexane p/po=0.33 | | | | p-xylene p/po=0.5 | | | | m-xylene p/po=0.5 | | | | Cyclo-hexane p/po=0.4 | |
| | | A | B | C | D | A | B | C | D | A | B | C | D | C | D |
| HZSM5 | pseudomonoclinic | 9.3 | — | 9.6 | 10.5 | 8.5 | — | 9.5 | 100 | 6.2 | — | 9.1 | 9.8 | 2.0 | 3.0 |
| HNu-4 | monoclinic | 10.5 | 11 | 11.2 | 12.0 | 8.5 | 9.7 | 9.8 | 10.3 | 1.9 | 4.2 | 6.8 | 10.0 | 0.5 | 2.5 |

A, B, C, D are 10 minutes, 1, 2 and 24 hours respectively.

The invention provides also a method of making zeolite Nu-4 which comprises reacting an aqueous mixture comprising at least one oxide $XO_2$, at least one oxide $Y_2O_3$ and at least one polyalkylene polyamine having the formula:

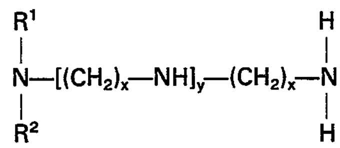

wherein each of $R^1$ and $R^2$, independently, represents hydrogen or a $C_1$—$C_6$ alkyl group, x is an integer from 2 to 6 and y is an integer from 0 to 10, provided that when y is 0 and $R^1$ and $R^2$ are both alkyl groups, x is 2 to 5 and that when y is 0 and $R^1$ and $R^2$ are not both alkyl groups, x is 4 or 5, an amine degradation product thereof, or a precursor thereof and wherein the reaction mixture has the molar composition

$XO_2/Y_2O_3$ = 40 to 1000

$Q/XO_2$ = 0.01 to 4.0

$M^1OH/XO_2$ = 0 to 2.0

$H_2O/XO_2$ = 10 to 200

$M^2Z/XO_2$ = 0 to 4.0

However, zeolite Nu-10 of our European Patent Application No 82 30 2366 can be synthesised from a similar range of molar ratios. Therefore, to ensure that zeolite Nu-4 is obtained free of zeolite Nu-10 it is necessary to employ either low $H_2O/XO_2$ ratios or high $M^1OH/XO_2$ ratios or both.

The preferred ranges for preparing zeolite Nu-4 are as follows:

Range 1

$XO_2/Y_2O_3$ = 40 to 70

$Q/XO_2$ = 0.1 to 4.0

$H_2O/XO_2$ = 15 to 45

$M^1OH/XO_2$ = 0 to 1.0

$M^2Z/XO_2$ = 0 to 2.0

Range 2(a)

$XO_2/Y_2O_3$ = 70 to 120

$Q/XO_2$ = 0.1 to 4.0

$M^2Z/XO_2$ = 0 to 2.0

if $H_2O/XO_2$ = 20 to 30

then $M^1OH/XO_2$ = 0.04 to 1.0

2(b):
if $H_2O/XO_2$ = 30 to 40

then $M^1OH/XO_2$ = 0.1 to 1.0

2(c):
if $H_2O/XO_2$ = 40 to 60

then $M^1OH/XO_2$ = 0.18 to 1.0

Range 3

| | | |
|---|---|---|
| $XO_2/Y_2O_3$ | = | 120 to 300 |
| $Q/XO_2$ | = | 0.05 to 4.0 |
| $M^2Z/XO_2$ | = | 0 to 2.0 |
| $H_2O/XO_2$ | = | 10 to 70 |
| $M^1O/XO_2$ | = | 0.8 to 1.0 |

Range 4

| | | |
|---|---|---|
| $XO_2/Y_2O_3$ | = | 300 to 500 |
| $Q/XO_2$ | = | 0.02 to 4.0 |
| $M^2Z/XO_2$ | = | 0 to 2.0 |
| $H_2O/XO_2$ | = | 10 to 70 |
| $M^1OH/XO_2$ | = | 0 to 1.0 |

Zeolite Nu-4 can be prepared in the temperature range 50 to 250°C. The preferred range is 90 to 180°C and crystallisation is carried out until substantially pure crystalline Nu-4 is obtained. Agitated reactions are preferred.

X is silicon or germanium, Y is aluminium, iron, chromium, vanadium molybdenum, arsenic, antimony, manganese, gallium or boron, $M^1$ is an alkali metal optionally with ammonium and/or hydrogen, $M^2$ is an alkali metal or ammonium or hydrogen and can be the same as $M^1$ and Q is the aforesaid polyalkylene polyamine, amine degradation product thereof or a precursor thereof, or a related compound. $Z^-$ is a strong acid radical present as a salt of $M^2$ and may be added as a free acid to reduce the free $M^1OH$ level to a desired value.

$M^2Z$ addition, while not essential, can accelerate crystallisation of zeolite Nu-4 and can also affect the size of crystals obtained. It should be noted that addition of $M^2Z$ can promote the formation of α-quartz and α-crystobalite, this can usually be avoided by reducing reaction times and/or temperature to minimise the chances of overrun. If $M^2Z$ remains intercalated within the zeolite Nu-4 framework, then it can have substantial effects on the sorption and catalytic properties. $M^1$ and/or Q can be present as hydroxides or salts of inorganic or organic acids provided the $M^1OH/XO_2$ requirement is fulfilled.

The preferred polyalkylene polyamines are triethylene tetramine, tetraethylene pentamine, and unsymmetrical disubstituted diamines such as N,N-diethyl ethylene diamine.

The preferred alkali metal $M^1$ is sodium and for $M^2$, sodium or hydrogen is preferred. The preferred oxide $XO_2$ is silica ($SiO_2$) and the preferred oxide $Y_2O_3$ is alumina ($Al_2O_3$).

The silica source can be any of those commonly considered for use in synthesising zeolites, for example powdered solid silica, silicic acid, colloidal silica or dissolved silica. Among the powdered silicas usable are precipitated silicas, especially those made by precipitation from an alkali metal silicate solution, such as the type known as "KS 300" made by AKZO, and similar products, aerosil silicas, fume silicas and silica gels suitably in grades for use in reinforcing pigments for rubber or silicone rubber. Colloidal silicas of various particle sizes may be used, for example 10—15 or 40—50 microns, as sold under the Registered Trade Marks "LUDOX", "NALCOAG" and "SYTON". The usable dissolved silicas include commercially available waterglass silicates containing 0.5 to 6.0, especially 2.0 to 4.0 mols of $SiO_2$ per mol of alkali metal oxide, "active" alkali metal silicates as defined in UK Patent 1193254, and silicates made by dissolving silica in alkali metal hydroxide or quaternary ammonium hydroxide or a mixture thereof.

The alumina source is most conveniently sodium aluminate, but can be or include aluminium, an aluminium salt, for example the chloride, nitrate or sulphate, an aluminium alkoxide or alumina itself, which should preferably be in a hydrated or hydratable form such as colloidal alumina, pseudoboehmite, boehmite, gamma alumina or the alpha or beta trihydrate.

The reaction mixture is reacted usually under autogenous pressure, optionally with added gas, e.g. nitrogen at a temperature between 85 and 250°C until crystals of zeolite Nu-4 form, which can be from 1 hour to many months depending on the reactant composition and the operating temperature. Agitation is optional, but is preferable since it reduces the reaction time.

At the end of the reaction, the solid phase is collected on a filter and washed and is then ready for further steps such as drying, dehydration and ion-exchange.

If the product of the reaction contains alkali metal ions, these have to be at least partly removed in order to prepare the hydrogen form of Nu-4 and this can be done by ion exchange with an acid, especially a strong mineral acid such as hydrochloric acid or by way of the ammonium compound, made by ion

exchange with a solution of an ammonium salt such as ammonium chloride. Such ion exchange can be carried out by slurrying once or several times with the solution.

In general, the cation(s) of zeolite Nu-4 can be replaced by any cation(s) of metals, and particularly those in Groups IA, IB, IIA, IIB, III (including rare earths) VIII (including noble metals) and by lead, tin and bismuth. (The Periodic Table is as in "Abridgements of Specifications" published by the UK Patent Office). Exchange is carried out using any water soluble salts containing the appropriate cation.

In order to prepare a catalyst, zeolite Nu-4 may be used in association with an inorganic matrix, or with other materials which can be either inert or catalytically active. The matrix may be present simply as a binding agent to hold the small zeolite particles (0.005 to 10 microns) together, or it may be added as a diluent to control the amount of conversion in a process which may otherwise proceed at too high a rate, leading to catalyst fouling as a result of excessive coke formation. Typical inorganic diluents include catalyst support materials such as alumina, silica, kaolinic clays, bentonites, montmorrilonites, sepiolite, attapulgite, Fullers earth, synthetic porous materials such as $SiO_2$—$Al_2O_3$, $SiO_2$—$ZrO_2$, $SiO_2$—$ThO_2$, $SiO_2$—BeO, $SiO_2$—$TiO_2$ or any combination of these oxides. An effective way of mixing zeolite Nu-4 with such diluents is to mix appropriate aqueous slurries in a mixing nozzle and then to spray-dry the slurry. Other ways of mixing can be used.

If zeolite Nu-4 in any cationic form or as a catalytic composite is exchanged or impregnated with hydrogenation/dehydrogenation components, such as Ni, Co, Pt, Pd, Re, Rh, hydrocracking and reforming catalysts can be made, especially if the $Na_2O$ content is less than 0.3% w/w.

A wide range of hydrocarbon conversion catalysts can be prepared from zeolite Nu-4 by ion exchange or impregnation with cations, or oxides, selected from the following, Cu, Ag, Mg, Ca, Sr, Zn, Cd, B, Al, Sn, Pb, V, P, Sb, Cr, Mo, W, Mn, Re, Fe, Co, Ni, noble metals.

Usually the Nu-4 catalyst will be in acid form, thus stoichiometry is maintained by $H^+$ or $H_3O^+$ as an additional balancing cation, or as sole cation. Such catalysts may find application in the following processes; catalytic cracking, hydrodesulphurization, hydrodenitrification, catalytic dewaxing, alkylation of alkanes or aromatics, dealkylation, disproportionation, isomerisation of alkanes and alkyl benzenes, dehydration reactions, oxidation and polymerisation.

We have found that zeolite Nu-4 is especially useful as a catalyst for xylenes isomerisation. As is well known, the major aim in xylenes isomerisation is to increase the para-xylenes content of the feedstock at the expense of other isomers since para-xylene is a particularly useful and valuable product. The mixed xylenes feedstocks commonly available for xylenes isomerisation usually contain amounts of the three xylene isomers as well as ethylbenzene. Hitherto, some of the mixed xylenes feedstock available has contained relatively small amounts of ethylbenzene but it is anticipated that in the future such feedstocks will become more expensive and that resort will have to be made to feedstocks containing rather larger amounts of ethylbenzene, say up to about 25% ethylbenzene.

In our copending UK Application No. 8115411 we disclose the use of Nu-4 as a superior xylenes isomerisation catalyst.

Zeolite Nu-4 may also find applications in the separation of aromatics and cycloparaffins, and in pollution control by its ability to remove organic contaminants from aqueous effluents.

The invention is illustrated by the following Examples.

Example 1

Preparation of sodium tetraethylenepentamine (TEPA) Nu-4 and sodium hydrogen Nu-4.

The synthesis mixture had the following molar composition: 11.4 $Na_2O$, 29.3 TEPA, $Al_2O_3$, 100.7 $SiO_2$, 4058 $H_2O$, 54.7 NaCl.

37.8 g TEPA were dispersed in 142 g colloidal silica (SYTON×30) ($Na_2O$, 0.395 $Al_2O_3$, 85.6 $SiO_2$, 689 $H_2O$) Next 1.3 g sodium aluminate (1.19 $Na_2O$, $Al_2O_3$, 1.29 $H_2O$) dissolved in 20 g water (containing 5 g sodium hydroxide) was stirred into the silica suspension followed by 23.5 g sodium chloride dissolved in 378 g water. The resulting slurry was reacted for 2 days at 180°C in a stirred 1 litre stainless steel autoclave under autogenous pressure. After cooling to about 60°C the slurry was filtered and washed with 2 litres of distilled water at 60°C and dried overnight at 120°C. The product was sodium TEPA Nu-4 and had the X-ray diffraction data shown in Table 1 and molar composition 0.7 $Na_2O$, 2.2 Q, $Al_2O_3$, 64 $SiO_2$, 15 $H_2O$.

The bulk of this product was calcined in air for 17 hours at 550°C and had an X-ray diffraction pattern very similar to the asmade Nu-4 and nitrogen and carbon contents less than 0.1. The product was sodium hydrogen Nu-4 and the crystals were prismatic of average size 17×10×8 mμ and having a substantial degree of twinning.

Example 2

Preparation of hydrogen Nu-4. The calcined product of Example 1 was slurry-exchanged for 1 hour at 250°C with 4 ml of N hydrochloric acid per g of zeolite. The resulting hydrogen Nu-4 was washed with 10 ml of distilled water per g of zeolite, dried overnight at 120°C and at 450°C for 6 hours.

Example 3

In a second synthesis experiment, the mixture had the following molar composition 1.91 $Na_2O$, 20 TEPA, $Al_2O_3$, 60 $SiO_2$, 2400 $H_2O$, 32 NaCl. The reaction was carried out exactly as described in Example 1

except that the weights of reactants used were as follows: 44.5 g TEPA, 145 g SYTON X-30, 2.7 g sodium aluminate, 18 g water, 22 g sodium chloride, 387 g water. The product was identified as zeolite Nu-4 from X-ray analysis (Table 4) and its as made composition was 0.38 $Na_2O$, 2.5 Q, $Al_2O_3$, 41 $SiO_2$, 12.5 $H_2O$. Again the crystals were prismatic with average size 12×18×5 mμ and a substantial level of twinning.

TABLE 4
As made zeolite Nu-4 of Example 3

| | | | | | | | | | | |
|---|---|---|---|---|---|---|---|---|---|---|
| dA | 11.2 | 10.07 | 9.98 | 9.79 | 9.31 | 9.02 | 7.45 | 7.09 | 6.72 | |
| $100^I/I_o$ | 30 | 26 | 8 | 10 | 1 | 1 | 4 | 2 | 4 | |
| dA | 6.38 | 6.06 | 6.01 | 5.97 | 5.73 | 5.55 | 5.38 | 5.14 | 4.99 | |
| $100^I/I_o$ | 8 | 5 | 7 | 7 | 9 | 8 | 3 | 5 | 6 | |
| dA | 4.890 | 4.726 | 4.609 | 4.558 | 4.495 | 4.461 | 4.370 | 4.272 | 4.126 | |
| $100^I/I_o$ | 1 | 1 | 10 | 3 | 1 | 3 | 10 | 16 | 7 | |
| dA | 4.086 | 4.047 | 4.023 | 3.950 | 3.880 | 3.837 | 3.765 | 3.736 | 3.668 | 3.610 |
| $100^I/I_o$ | 4 | 2 | 8 | 2 | 100 | 78 | 35 | 45 | 24 | 4 |

Example 4

Part of the product of Example 3 was calcined for 17 hours in air at 550°C and then exchanged with N hydrochloric acid as in Example 2. The resulting hydrogen Nu-4 after calcination at 450°C for 6 hours had the following molar composition 0.014 $Na_2O$, $Al_2O_3$ 40.1 $SiO_2$. This sample was used in the sorption and catalytic experiments.

Example 5

In this Example, 10 g of the as-made product of Example 1 was heated in a stirred 1 litre stainless steel autoclave with 500 ml of 10% sodium chloride solution (aqueous) at 180°C for 6 hours. The slurry product was filtered, and washed with 1 litre of distilled water at 60°C, and dried overnight at 120°C. The X-ray data for this product was identical with the as made Nu-4. However, from chemical analysis this treatment removed all the TEPA and converted the zeolite to the sodium form. The molar composition of the dried product was 0.92 $Na_2O$, $Al_2O_3$, 72 $SiO_2$, 20.7 $H_2O$.

Example 6

In another synthesis experiment, the mixture had the following molar composition 40 $Na_2O$, 8 TEPA, $Al_2O_3$, 150 $SiO_2$, 3770 $H_2O$, 35 $H_2SO_4$. In this example 15.1 g TEPA were stirred into 288 g Q-79 waterglass ($Na_2O$, 0.1 $Al_2O_3$ 3.775 $SiO_2$, 24 $H_2O$). Next 3.8 g aluminium sulphate ($Al_2O_3$, 3 $SO_3$, 16 $H_2O$) and 3.2 g 98% sulphuric acid in 503 g water were stirred into the silicate solution. The resulting slurry was reacted at 180°C for 4 days in a stirred, stainless steel autoclave. The product was again identified as zeolite Nu-4 of molar composition 0.16 $Na_2O$, 5.8 Q, $Al_2O_3$, 120 $SiO_2$, 40 $H_2O$.

Example 7

In this example, the reaction mixture had the following molar composition after pre-evaporation at 105°C.

2.34 $Na_2O$, 27 TEPA, $Al_2O_3$, 96.3 $SiO_2$, 1926 $H_2O$, 54.8 NaCl, 38 g TEPA were dispersed in 142 g colloidal silica. Next 1.6 g sodium aluminate (1.25 $Na_2O$, $Al_2O_3$, 3 $H_2O$) were dissolved in 10 g water and stirred into the silica suspension. Finally 23 g sodium chloride dissolved in 388 g water were stirred in. The resulting gel/slurry had an $H_2O/SiO_2$ ratio of 40, but by deliberately evaporating with stirring at 105°C, 250 g of water were distilled off to give an $H_2O/SiO_2$ ratio of 20. This mixture was refluxed with stirring in a pyrex flask for 4 days at 105°C. The product was an excellent sample of zeolite Nu-4, having X-ray data as shown in Table 5.

When an identical preliminary reaction mixture was made up as above, but omitting the deliberate evaporation stage, i.e. running the reaction at 105°C under reflux at $H_2O/SiO_2$ ratio of 40, then after 40 days the product was zeolite Nu-10 containing no detectable zeolite Nu-4.

TABLE 5

X-ray data for as made zeolite Nu-4 of Example 7

| | | | | | | | | | |
|---|---|---|---|---|---|---|---|---|---|
| dA | 11.3 | 10.2 | 9.93 | 9.90 | 7.47 | 6.73 | 6.39 | 6.10 | 6.03 |
| $100^I/I_o$ | 39 | 25 | 6 | 8 | 3 | 4 | 6 | 4 | 6 |
| dA | 5.72 | 5.63 | 5.59 | 5.37 | 5.16 | 5.01 | 4.910 | 4.623 | 4.48 |
| $100^I/I_o$ | 5 | 6 | 6 | 2 | 2 | 3 | 1 | 8 | 3 |
| dA | 4.460 | 4.375 | 4.271 | 4.120 | 4.077 | 4.004 | 3.867 | 3.850 | 3.779 |
| $100^I/I_o$ | 2 | 14 | 11 | 1 | 1 | 1 | 100 | 70 | 25 |
| dA | 3.754 | 3.731 | 3.655 | 3.605 | 3.493 | 3.447 | 3.401 | 3.357 | 3.314 |
| $100^I/I_o$ | 32 | 49 | 26 | 1 | 6 | 11 | 4 | 6 | 9 |
| dA | 3.255 | 3.143 | 3.053 | 2.988 | 2.945 | 2.867 | 2.788 | 2.739 | 2.611 |
| $100^I/I_o$ | 3 | 2 | 10 | 12 | 3 | 2 | 1 | 3 | 3 |
| dA | 2.515 | 2.491 | 2.417 | 2.398 | 2.015 | 1.998 | | | |
| $100^I/I_o$ | 2 | 3 | 2 | 3 | 8 | 8 | | | |

Example 8

In this example, the mixture had the following molar composition:

1.81 $Na_2O$, 47.6 TETA, $Al_2O_3$, 50.6 $SiO_2$, 2028 $H_2O$.91.5 g triethylene tetramine (TETA) were stirred into 373 g water followed by 137 g colloidal silica. Finally 3 g sodium aluminate (1.25 $Na_2O$, $Al_2O_3$, $3H_2O$) dissolved in 10 g water were stirred in until homogeneous (30 minutes). The reaction was as for Example 1 except that the reaction time was 5 days. The product was zeolite Nu-4 having X-ray data as shown in Table 6, and having a molar composition 0.3 $Na_2O$, 1.4 TETA, $Al_2O_3$, 40 $SiO_2$, 12 $H_2O$.

TABLE 6

X-ray data zeolite Nu-4 of Example 8

| | | | | | | | | | | |
|---|---|---|---|---|---|---|---|---|---|---|
| dA | 11.7 | 11.26 | 10.8 | 10.11 | 9.85 | 9.13 | 7.47 | 6.97 | 6.76 | 6.37 |
| $100^I/I_o$ | 2 | 6 | 10 | 21 | 28 | 19 | 1 | 15 | 4 | 16 |
| dA | 6.01 | 5.58 | 5.37 | 5.15 | 5.02 | 4.618 | 4.376 | 4.360 | 4.287 | 3.878 |
| $100^I/I_o$ | 13 | 20 | 4 | 14 | 14 | 11 | 20 | 15 | 13 | 100 |
| dA | 3.846 | 3.747 | 3.660 | 3.498 | 3.457 | 3.375 | 3.329 | 3.258 | 3.051 | 2.830 |
| $100^I/I_o$ | 72 | 60 | 32 | 15 | 15 | 14 | 15 | 9 | 13 | 16 |
| dA | 2.623 | 2.520 | 2.430 | 2.216 | 2.067 | 2.028 | 2.011 | 1.889 | 1.683 | 1.68 |
| $100^I/I_o$ | 7 | 7 | 6 | 1 | 2 | 13 | 23 | 4 | 5 | 4 |

Example 9

The reaction mixture had the following molar composition: 0.50 $Na_2O$, 20.4 TEPA, $Al_2O_3$, 61.8 $SiO_2$, 2446 $H_2O$ 32.6 NaCl, 1.47 $Na_2SO_4$. 44.5 g TEPA were dispersed in 142 g colloidal silica. Next 2.3 g sodium aluminate (1.19 $Na_2O$, $Al_2O_3$, 1.29 $H_2O$) were dissolved in 18 g water and then stirred into the silica suspension. Finally 22 g sodium chloride and 1.7 g concentrated sulphuric acid in 388 g water were stirred in. The mixture was homogenized, and then reacted as in Example 1, but for a period of 5 days at 180°C. The product was an excellent sample of zeolite Nu-4 having the X-ray data shown in Table 7.

TABLE 7
X-ray data for zeolite Nu-4 of Example 9

| | | | | | | | | | | | |
|---|---|---|---|---|---|---|---|---|---|---|---|
| dA | 11.26 | 11.13 | 10.08 | 9.99 | 7.50 | 7.16 | 6.76 | 6.41 | 6.04 | | |
| $100^I/I_o$ | 16 | 6 | 16 | 7 | 2 | 1 | 2 | 5 | 6 | | |
| dA | 6.00 | 5.73 | 5.61 | 5.43 | 5.17 | 5.03 | 5.02 | 4.633 | 4.381 | | |
| $100^I/I_o$ | 6 | 6 | 6 | 2 | 2 | 2 | 4 | 7 | 12 | | |
| dA | 4.287 | 4.101 | 4.028 | 3.876 | 3.859 | 3.743 | 3.725 | 3.665 | 3.654 | | |
| $100^I/I_o$ | 10 | 4 | 7 | 100 | 76 | 59 | 52 | 27 | 20 | | |
| dA | 3.634 | 3.462 | 3.367 | 3.328 | 3.270 | 3.260 | 3.152 | 3.061 | 2.991 | | |
| $100^I/I_o$ | 5 | 8 | 7 | 11 | 4 | 4 | 2 | 11 | 16 | | |
| dA | 2.984 | 2.952 | 2.876 | 2.838 | 2.792 | 2.744 | 2.692 | 2.616 | 2.570 | | |
| $100^I/I_o$ | 14 | 7 | 2 | 1 | 1 | 4 | 1 | 4 | 5 | | |
| dA | 2.523 | 2.496 | 2.424 | 2.406 | 2.187 | 2.086 | 2.017 | 2.009 | 2.001 | 1.960 | 1.922 |
| $100^I/I_o$ | 5 | 6 | 3 | 5 | 2 | 2 | 11 | 10 | 12 | 3 | 4 |

Example 10

The reaction mixture had the following molar composition: 4.64 $Na_2O$, 20.4 TEPA, $Al_2O_3$, 61.8 $SiO_2$, 2446 $H_2O$, 32.6 NaCl. The mixture was as for Example 9, except that 2.5 g sodium hydroxide were added to the sodium aluminate, and no sulphuric acid was added to the mixture. The reaction was as for example 9 except that zeolite Nu-4 crystallised in only 1 day instead of the 5 days required for Example 9. X-ray data for the product is given in Table 8.

TABLE 8
X-ray data for Nu-4 of Example 10

| | | | | | | | | | | | |
|---|---|---|---|---|---|---|---|---|---|---|---|
| dA | 11.26 | 11.13 | 9.98 | 9.60 | 8.93 | 7.44 | 6.70 | 6.36 | 6.02 | 5.92 | 5.68 |
| $100^I/I_o$ | 14 | 15 | 18 | 5 | 1 | 1 | 2 | 4 | 4 | 4 | 4 |
| dA | 5.56 | 5.37 | 5.12 | 5.07 | 4.993 | 4.844 | 4.607 | 4.521 | 4.360 | 4.262 | 4.083 |
| $100^I/I_o$ | 4 | 1 | 1 | 3 | 3 | 1 | 6 | 2 | 12 | 9 | 4 |
| dA | 4.010 | 3.989 | 3.843 | 3.813 | 3.766 | 3.728 | 3.652 | 3.634 | 3.477 | 3.450 | 3.348 |
| $100^I/I_o$ | 7 | 6 | 100 | 72 | 49 | 55 | 24 | 18 | 8 | 8 | 8 |
| dA | 3.318 | 3.256 | 3.140 | 3.051 | 2.983 | 2.979 | 2.942 | 2.869 | 2.735 | 2.608 | 2.565 |
| $100^I/I_o$ | 10 | 4 | 2 | 10 | 15 | 13 | 5 | 2 | 3 | 4 | 2 |
| dA | 2.516 | 2.502 | 2.490 | 2.418 | 2.400 | 2.081 | 2.019 | 2.011 | 1.998 | 1.957 | 1.920 |
| $100^I/I_o$ | 3 | 5 | 6 | 3 | 4 | 2 | 10 | 8 | 11 | 3 | 4 |

Example 11

The reaction mixture had the following molar composition: 34.5 $Na_2O$, 280.5 TETA, $Al_2O_3$, 300 $SiO_2$, 11320 $H_2O$, 166 NaCl .91.5 g triethylene tetramine were dispersed in 137 g colloidal silica. Next, 0.45 g sodium aluminate (1.25 $Na_2O$, $Al_2O_3$ 3 $H_2O$) and 5.3 g sodium hydroxide were dissolved in 20 g water and stirred into the silica suspension. Finally, 21.8 g sodium chloride dissolved in 363 g water were stirred in and the resulting gel/slurry was homogenised for 30 minutes and then reacted as in Example 1 but for 1 day

at 180°C. The product was an excellent sample of zeolite Nu-4 having the X-ray data shown in Table 9 and a $SiO_2/Al_2O_3$ ratio of 200.

TABLE 9

| | | | | | | | | | | |
|---|---|---|---|---|---|---|---|---|---|---|
| dA | 11.23 | 11.15 | 10.01 | 8.71 | 7.47 | 6.73 | 6.39 | 6.02 | 5.67 | 5.15 |
| $100^I/I_o$ | 15 | 20 | 17 | 2 | 2 | 3 | 5 | 5 | 3 | 2 |
| dA | 5.01 | 5.00 | 4.624 | 4.360 | 4.273 | 4.101 | 4.019 | 3.870 | 3.851 | 3.741 |
| $100^I/I_o$ | 3 | 3 | 6 | 21 | 14 | 15 | 14 | 80 | 100 | 55 |
| dA | 3.659 | 3.649 | 3.630 | 3.499 | 3.444 | 3.353 | 3.252 | 3.201 | 3.156 | 3.058 |
| $100^1I_o$ | 29 | 20 | 5 | 11 | 17 | 5 | 5 | 5 | 3 | 9 |
| dA | 2.989 | 2.980 | 2.947 | 2.887 | 2.806 | 2.754 | 2.699 | 2.623 | 2.509 | 2.475 |
| $100^I/I_o$ | 15 | 12 | 6 | 2 | 1 | 3 | 2 | 5 | 14 | 11 |
| dA | 2.413 | 2.344 | 2.296 | 2.249 | 2.140 | 2.090 | 2.021 | 2.004 | 1.995 | 1.965 |
| $100^I/I_o$ | 5 | 1 | 9 | 5 | 8 | 2 | 11 | 14 | 11 | 3 |

Example 12

The reaction mixture had $OH^-/SiO_2=O$ and a molar composition: 20.4 TEPA, $Al_2O_3$, 61.8 $SiO_2$, 2446 $H_2O$, 32.5 NaCl, 1.88 $Na_2SO_4$. 43 g of TEPA were dispersed in 141 g colloidal silica. Next, 2.2 g sodium aluminate (1.22 $Na_2O$, $Al_2O_3$, 1.2 $H_2O$) were dissolved in 10 g water and stirred into the siliceous mix. Finally, 21.1 g sodium chloride and 2.1 g concentrated sulphuric acid in 380 g water were stirred in, and the resulting slurry was homogenized for 30 minutes and then reacted for 9 days at 180°C in a stirred stainless steel autoclave. The product was zeolite Nu-4 having an $SiO_2/Al_2O$ ratio of 52.

Examples 13 to 16

In these Examples, additives were introduced into reaction mixtures of composition as for Example 1. All of the additives were dissolved in the sodium chloride solution except the antimonious oxide, which was dispersed in the final reaction mixture.

In Example 13, the additive was 5 g of potassium chrome alum. The dried product was zeolite Nu-4 containing 0.4% w/w $Cr_2O_3$.

In Example 14, the additive was 3 g of boric acid, the Nu-4 product contained 0.5% w/w $B_2O_3$.

In Example 15, the additive was 6.5 g of disodium hydrogen phosphate and the Nu-4 product contained 0.6% w/w P.

In Example 16, the additive was 3 g of antimonious oxide and the product contained 4% w/w $Sb_2O_3$.

Example 17

This Example demonstrates that certain diamines can be used in zeolite Nu-4 synthesis. The synthesis mixture had the following composition: 2.32 $Na_2O$, 26 Q, $Al_2O_3$, 96.3 $SiO_2$, 3862 $H_2O$, 548 NaCl. 21.6 g TETA were dispersed in 142 g colloidal silica. Next, 1.6 g sodium aluminate were dissolved in 10 g water and stirred into the siliceous mix. Finally, 23 g sodium chloride in 398 g water were stirred in. The mixture was reacted for 3 days at 180°C in a stirred stainless steel autoclave. The product was highly crystalline zeolite Nu-4 having an $SiO_2/Al_2O_3$ ratio of 80 and the X-ray data shown in Table 10.

By contrast, if symmetrical N, $N^1$-diethyl ethylene diamine is used in reactions like Example 17, then the product is a mixture of approximately equal amounts of zeolites Nu-4 and Nu-10. If potassium is used as main cation then the product is pure zeolite Nu-10 (see Example 16 of our European Patent Application No 82 30 2366.

TABLE 10
X-ray data for zeolite Nu-4 of Example 17

| dA | 11.11 | 11.08 | 9.97 | 9.96 | 9.71 | 8.98 | 7.42 | 7.07 | 6.71 | 5.99 | 5.74 | 5.65 | 5.60 | 5.355 | 5.131 | 5.020 | 4.988 |
|---|---|---|---|---|---|---|---|---|---|---|---|---|---|---|---|---|---|
| $100I/I_o$ | 28 | 24 | 33 | 36 | 12 | 1 | 4 | 2 | 2 | 11 | 8 | 8 | 7 | 2 | 3 | 3 | 6 |

| dA | 4.857 | 4.652 | 4.606 | 4.543 | 4.447 | 4.360 | 4.257 | 4.073 | 4.010 | 3.841 | 3.810 | 3.742 | 3.719 | 3.644 | 3.596 | 3.477 |
|---|---|---|---|---|---|---|---|---|---|---|---|---|---|---|---|---|
| $100I/I_o$ | 1 | 3 | 4 | 1 | 2 | 8 | 12 | 5 | 7 | 100 | 63 | 39 | 49 | 22 | 3 | 6 |

| dA | 3.442 | 3.314 | 3.246 | 3.185 | 3.145 | 3.114 | 2.938 | 2.732 | 2.804 | 2.593 | 2.588 | 2.509 | 2.485 | 2.412 | 2.394 | 2.077 | 2.011 | 1.992 |
|---|---|---|---|---|---|---|---|---|---|---|---|---|---|---|---|---|---|---|
| $100I/I_o$ | 8 | 10 | 4 | 2 | 2 | 2 | 7 | 4 | 4 | 2 | 2 | 3 | 6 | 3 | 4 | 1 | 11 | 11 |

Example 18

The reaction mixture had the following molar composition: 45 $Na_2O$, 100 TEPA, $Al_2O_3$, 300 $SiO_2$, 11,000 $H_2O$ 350 g TEPA and 175 g Syton×30 were mixed with 374 g water. Next, 0.5 g sodium aluminate and 8.4 g sodium hydroxide were dissolved in 21 g water. The aluminate was stirred into the silica suspension and reacted for 2 days at 150°C in a stirred 1 litre stainless steel autoclave. The dried product was zeolite Nu-4 having a $SiO_2/Al_2O_3$ ratio of 250.

An identical mixture was reacted at 180°C and after only 12 hours the product contained approximately equal amounts of zeolite Nu-4, a near-magadiite—and amorphous material. After 16 hours, the product contained approximately equal quantities of zeolite Nu-4 and magadiite. This latter result illustrates that the temperature of crystallisation of Nu-4 is more critical at higher $SiO_2/Al_2O_3$ ratios.

Example 19

The reaction mixture had the following molar composition: 31.3, $Na_2O$, 25 TEPA, $Al_2O_3$, 100 $SiO_2$, 4058 $H_2O$, 19.9 $H_2SO_4$. 42.6 g TEPA were mixed into 195 g Q-79 waterglass ($Na_2O$, 0.0025 $Al_2O_3$, 3.2 $SiO_2$, 24.3 $H_2O$) and 414 g water. Next, 5.2 g aluminium sulphate ($Al_2O_3$, $3SO_3$, 16 $H_2O$) and 15.4 g concentrated sulphuric acid were mixed into 119 g water. The acidic solution was stirred into the siliceous mixture until homogenous (30 minutes). The reaction was carried out for 2 days at 150°C in a stirred stainless steel 1 litre autoclave. The dried zeolite Nu-4 product had a $SiO_2/Al_2O_3$ ratio of 87.

**Claims**

1. A synthetic zeolite material having a molar composition expressed by the formula:

$$0.1 \text{ to } 7.5\ M_2O{:}0.2 \text{ to } 2.5\ Y_2O_3{:}100\ XO_2{:}0 \text{ to } 50\ H_2O$$

wherein M is a monovalent cation or 1/n of a cation of valency n, X is silicon or germanium, Y is aluminium, iron, chromium, vanadium, molybdenum, arsenic, antimony, manganese, gallium, or boron, and $H_2O$ is water of hydration additional to water notionally present when M is H, and having the following X-ray pattern:

| Zeolite Nu-4 (as made) dA | 100 $I/I_o$ | Zeolite Nu-4 (calcined H form) dA | 100 $I/I_o$ |
|---|---|---|---|
| 11.3 | 16 | — | — |
| 11.1 | 20 | 11.07 | 33 |
| 10.08 | 15 | 10.07 | 36 |
| 9.90 | 8 | 9.96 | 10 |
| 9.77 | 6 | 9.79 | 10 |
| — | — | 9.28 | 1 |
| 9.05 | 1 | 9.02 | 1.5 |
| — | — | 8.08 | 1 |
| 7.50 | 2 | 7.45 | 4 |
| 7.09 | 1 | 7.09 | 2 |
| 6.78 | 2 | 6.72 | 4 |
| 6.44 | 5 | 6.38 | 8 |
| 6.07 | 4 | 6.08 | 5 |
| 6.05 | 5 | 6.02 | 7 |
| 5.97 | 1 | 5.99 | 7 |
| 5.75 | 8 | 5.73 | 9 |
| 5.65 | 6 | 5.57 | 8 |
| 5.63 | 2 | — | — |
| 5.41 | 2 | 5.38 | 2 |
| 5.19 | 2 | 5.15 | 4 |
| 5.07 | 2 | 5.04 | 3 |
| 5.01 | 4 | 5.005 | 5 |
| 4.915 | 1 | 4.899 | 1 |
| — | — | 4.725 | 1 |
| 4.629 | 9 | 4.610 | 9 |
| 4.558 | 1 | 4.560 | 2 |
| 4.495 | 2 | 4.490 | 1 |
| 4.475 | 2 | 4.470 | 2 |
| 4.386 | 13 | 4.380 | 14 |
| 4.291 | 10 | 4.280 | 13 |

| Zeolite Nu-4 (as made) dA | 100 $I/I_o$ | Zeolite Nu-4 (calcined H form) dA | 100 $I/I_o$ |
|---|---|---|---|
| 4.124 | 13 | 4.103 | 3 |
| 4.104 | 4 | — | — |
| 4.039 | 6 | 4.022 | 7 |
| 3.950 | 1 | 3.950 | 2 |
| 3.880 | 100 | — | — |
| 3.850 | 69 | 3.869 | 100 |
| — | — | 3.836 | 73 |
| 3.743 | 51 | 3.764 | 35 |
| 3.730 | 50 | 3.735 | 54 |
| 3.678 | 27 | 3.662 | 29 |
| 3.649 | 22 | 3.604 | 4 |
| 3.629 | 5 | — | — |
| — | — | 3.500 | 5 |
| 3.466 | 12 | 3.469 | 10 |
| 3.364 | 6 | 3.368 | 7 |
| 3.332 | 9 | 3.342 | 10 |
| 3.329 | 4 | — | — |
| 3.273 | 4 | 3.265 | 3 |
| 3.267 | 4 | — | — |
| 3.260 | 4 | 3.260 | 12 |

1Å=0.1 nm.

2. A synthetic zeolite material according to claim 1 having a molar composition expressed by the formula:

$$0.1 \text{ to } 7.5\ M_2O:0.5 \text{ to } 2\ Y_2O_3:100\ XO_2:0 \text{ to } 50\ H_2O$$

3. A synthetic zeolite material according to claim 1 or claim 2 wherein M is or includes hydrogen.

4. A method of making a synthetic zeolite material as defined in claim 1 which comprises reacting an aqueous mixture containing at least one oxide $XO_2$, at least one oxide $Y_2O_3$ and at least one polyalkylene polyamine having the formula

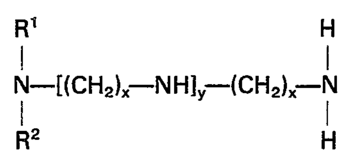

wherein each of $R^1$ and $R^2$, independently, represents hydrogen or a $C_1$—$C_6$ alkyl group, x is an integer from

2 to 6 and y is an integer from 0 to 10, provided that when y is 0 and $R^1$ and $R^2$ are both alkyl groups, x is 2 to 5 and that when y is 0 and $R^1$ and $R^2$ are not both alkyl groups, x is 4 or 5 and wherein the aqueous mixture has the molar composition:

| | |
|---|---|
| $XO_2/Y_2O_3$ | 40 to 1000 |
| $Q/XO_2$ | 0.01 to 4.0 |
| $M^1OH/XO_2$ | 0 to 2.0 |
| $H_2O/XO_2$ | 10 to 200 |
| $M^2Z/XO_2$ | 0 to 4.0 |

wherein X and Y have the meanings given in claim 1, $M^1$ is an alkali metal optionally with ammonium and/or hydrogen, $M^2$ is an alkali metal, ammonium or hydrogen, Q is the polyalkylene polyamine and Z is a strong acid radical.

5. A method according to claim 4 wherein the aqueous mixture has the molar composition:

| | |
|---|---|
| $XO_2/Y_2O_3$ | 40 to 70 |
| $Q/XO_2$ | 0.1 to 4.0 |
| $M^1OH/XO_2$ | 0 to 1.0 |
| $H_2O/XO_2$ | 15 to 45 |
| $M^2Z/XO_2$ | 0 to 2.0 |

6. A method according to claim 4 wherein the aqueous mixture has the molar composition:

| | |
|---|---|
| $XO_2/Y_2O_3$ | 70 to 120 |
| $Q/XO_2$ | 0.1 to 4.0 |
| $M^1OH/XO_2$ | 0.04 to 1.0 |
| $H_2O/XO_2$ | 20 to 30 |
| $M^2Z/XO_2$ | 0 to 2.0 |

7. A method according to claim 4 wherein the aqueous mixture has the molar composition:

| | |
|---|---|
| $XO_2/Y_2O_3$ | 70 to 120 |
| $Q/XO_2$ | 0.1 to 4.0 |
| $M^1OH/XO_2$ | 0.1 to 1.0 |
| $H_2O/XO_2$ | 30 to 40 |
| $M^2Z/XO_2$ | 0 to 2.0 |

8. A method according to claim 4 wherein the aqueous mixture has the molar composition:

| | |
|---|---|
| $XO_2/Y_2O_3$ | 70 to 120 |
| $Q/XO_2$ | 0.1 to 4.0 |
| $M^1OH/XO_2$ | 0.18 to 1.0 |
| $H_2O/XO_2$ | 40 to 60 |
| $M^2Z/XO_2$ | 0 to 2.0 |

9. A method according to claim 4 wherein the aqueous mixture has the molar composition:

| | |
|---|---|
| $XO_2/Y_2O_3$ | 120 to 300 |
| $Q/XO_2$ | 0.05 to 4.0 |
| $M^1OH/XO_2$ | 0.08 to 1.0 |
| $H_2O/XO_2$ | 20 to 60 |
| $M^2Z/XO_2$ | 0 to 2.0 |

10. A method according to claim 4 wherein the aqueous mixture has the molar composition:

| | |
|---|---|
| $XO_2/Y_2O_3$ | 300 to 500 |
| $Q/XO_2$ | 0.02 to 4.0 |
| $M^1OH/XO_2$ | 0 to 1.0 |
| $H_2O/XO_2$ | 10 to 70 |
| $M^2Z/XO_2$ | 0 to 2.0 |

11. A method according to any one of claims 4 to 10 wherein the polyamine is triethylene tetramine, tetraethylene pentamine or N,N-diethyl ethylene diamine.

12. A catalyst comprising a synthetic zeolite material as claimed in any one of claims 1 to 3.

13. A catalytic process employing the catalyst claimed in claim 12.

**Patentansprüche**

1. Synthetisches Zeolithmaterial mit einer molaren Zusammensetzung, die durch die Formel:

$$0{,}1 \text{ bis } 7{,}5\ M_2O:0{,}2 \text{ bis } 2{,}5\ Y_2O_3:100\ XO_2:0 \text{ bis } 50\ H_2O$$

ausgedrückt wird, worin M ein einwertiges Kation oder 1/n eines Kations mit der Wertigkeit n ist, X Silicium oder Germanium ist, Y Aluminium, Eisen, Chrom, Vanadium, Molybdän, Arsen, Antimon, Mangan, Gallium oder Bor ist und $H_2O$ Hydratwasser ist, das zu Wasser hinzukommt, das begrifflich vorhanden ist, wenn MH ist, und mit dem folgenden Röntgenbeugungsbild:

| Zeolith Nu-4 (im Herstellungs-zustand) | | Zeolith Nu-4 (calcinierte H-Form) | |
|---|---|---|---|
| d(Å) | 100 $(I/I_o)$ | d(Å) | 100 $(I/I_o)$ |
| 11,3 | 16 | — | — |
| 11,1 | 20 | 11,07 | 33 |
| 10,08 | 15 | 10,07 | 36 |
| 9,90 | 8 | 9,96 | 10 |
| 9,77 | 6 | 9,79 | 10 |
| — | — | 9,28 | 1 |
| 9,05 | 1 | 9,02 | 1,5 |
| — | — | 8,08 | 1 |
| 7,50 | 2 | 7,45 | 4 |
| 7,09 | 1 | 7,09 | 2 |
| 6,78 | 2 | 6,72 | 4 |
| 6,44 | 5 | 5,38 | 8 |
| 6,07 | 4 | 6,08 | 5 |
| 6,05 | 5 | 6,02 | 7 |
| 5,97 | 1 | 5,99 | 7 |
| 5,75 | 8 | 5,73 | 9 |
| 5,65 | 6 | 5,57 | 8 |
| 5,63 | 2 | — | — |
| 5,41 | 2 | 5,38 | 2 |
| 5,19 | 2 | 5,15 | 4 |
| 5,07 | 2 | 5,04 | 3 |
| 5,01 | 4 | 5,005 | 5 |
| 4,915 | 1 | 4,899 | 1 |
| — | — | 4,725 | 1 |
| 4,629 | 9 | 4,610 | 9 |
| 4,558 | 1 | 4,560 | 2 |
| 4,495 | 2 | 4,490 | 1 |
| 4,475 | 2 | 4,470 | 2 |
| 4,386 | 13 | 4,380 | 14 |

| Zeolith Nu-4 (im Herstellungs-zustand) | | Zeolith Nu-4 (calcinierte H-Form) | |
|---|---|---|---|
| d(Å) | 100 ($I/I_o$) | d(Å) | 100 ($I/I_o$) |
| 4,291 | 10 | 4,280 | 13 |
| 4,124 | 13 | 4,103 | 3 |
| 4,104 | 4 | — | — |
| 4,039 | 6 | 4,022 | 7 |
| 3,950 | 1 | 3,950 | 2 |
| 3,880 | 100 | — | — |
| 3,850 | 69 | 3,869 | 100 |
| — | — | 3,836 | 73 |
| 3,743 | 51 | 3,764 | 35 |
| 3,730 | 50 | 3,735 | 54 |
| 3,678 | 27 | 3,662 | 29 |
| 3,649 | 22 | 3,604 | 4 |
| 3,629 | 5 | — | — |
| — | — | 3,500 | 5 |
| 3,466 | 12 | 3,469 | 10 |
| 3,364 | 6 | 3,368 | 7 |
| 3,332 | 9 | 3,342 | 10 |
| 3,329 | 4 | — | — |
| 3,273 | 4 | 3,265 | 3 |
| 3,267 | 4 | — | — |
| 3,260 | 4 | 3,260 | 12 |

1Å=0,1 nm

2. Synthetisches Zeolithmaterial nach Anspruch 1 mit einer molaren Zusammensetzung, die durch die Formel:

$$0{,}1 \text{ bis } 7{,}5\ M_2O{:}0{,}5 \text{ bis } 2\ Y_2O_3{:}100\ XO_2{:}0 \text{ bis } 50\ H_2O$$

ausgedrückt wird.

3. Synthetisches Zeolithmaterial nach Anspruch 1 oder 2, worin M Wasserstoff ist oder Wasserstoff enthält.

4. Verfahren zur Herstellung eines synthetischen Zeolithmaterials, wie es in Anspruch 1 definiert ist, bei dem eine wäßrige Mischung, die mindestens ein Oxid $XO_2$, mindestens ein Oxid $Y_2O_3$ und und mindestens ein Polyalkylenpolyamin mit der Formel:

$$\begin{array}{ccc} R^1 & & H \\ | & & | \\ N- & [(CH_2)_x-NH]_y-(CH_2)_x & -N \\ | & & | \\ R^2 & & H \end{array}$$

worin $R^1$ und $R^2$ unabhängig voneinander jeweils Wasserstoff oder eine $C_1$- bis $C_6$-Alkylgruppe bedeuten, x eine ganze Zahl von 2 bis 6 ist und y eine ganze Zahl von 0 bis 10 ist, wobei die Bedingung gilt, daß×2 bis 5 ist, wenn y 0 ist und beide Gruppen $R^1$ und $R^2$ Alkylgruppen sind, und daß×4 oder 5 ist, wenn y 0 ist und nicht beide Gruppen $R^1$ und $R^2$ Alkylgruppen sind, enthält, zur Reaktion gebracht wird, wobei die wäßrige Mischung die folgende molare Zusammensetzung hat:

| | |
|---|---|
| $XO_2/Y_2O_3$ | 40 bis 1000 |
| $q/XO_2$ | 0,01 bis 4,0 |
| $M^1OH/XO_2$ | 0 bis 2,0 |
| $M^2Z/XO_2$ | 0 bis 4,0 |
| $H_2O/XO_2$ | 10 bis 200 |

worin X und Y die in Anspruch 1 angegebenen Bedeutungen haben, $M^1$ ein Alkalimetall—ggf. mit Ammonium und/oder Wasserstoff—ist, $M^2$ ein Alkalimetall, Ammonium oder Wasserstoff ist, Q das Polyalkylenpolyamin ist und Z ein Säurerest einer starken Säure ist.

5. Verfahren nach Anspruch 4, bei dem die wäßrige Mischung die folgende molare Zusammensetzung hat:

| | |
|---|---|
| $XO_2/Y_2O_3$ | 40 bis 70 |
| $Q/XO_2$ | 0,1 bis 4,0 |
| $M^1OH/XO_2$ | 0 bis 1,0 |
| $M^2Z/XO_2$ | 0 bis 2,0 |
| $H_2O/XO_2$ | 15 bis 45 |

6. Verfahren nach Anspruch 4, bei dem die wäßrige Mischung die folgende molare Zusammensetzung hat:

| | |
|---|---|
| $XO_2/Y_2O_3$ | 70 bis 120 |
| $Q/XO_2$ | 0,1 bis 4,0 |
| $M^1OH/XO_2$ | 0,04 bis 1,0 |
| $M^2Z/XO_2$ | 0 bis 2,0 |
| $H_2O/XO_2$ | 20 bis 30 |

7. Verfahren nach Anspruch 4, bei dem die wäßrige Mischung die folgende molare Zusammensetzung hat:

| | |
|---|---|
| $XO_2/Y_2O_3$ | 70 bis 120 |
| $Q/XO_2$ | 0,1 bis 4,0 |
| $M^1OH/XO_2$ | 0,1 bis 1,0 |
| $M^2Z/XO_2$ | 0 bis 2,0 |
| $H_2O/XO_2$ | 30 bis 40 |

8. Verfahren nach Anspruch 4, bei dem die wäßrige Mischung die folgende molare Zusammensetzung hat:

| | |
|---|---|
| $XO_2/Y_2O_3$ | 70 bis 120 |
| $Q/XO_2$ | 0,1 bis 4,0 |
| $M^1OH/XO_2$ | 0,18 bis 1,0 |
| $M^2Z/XO_2$ | 0 bis 2,0 |
| $H_2O/XO_2$ | 40 bis 60 |

9. Verfahren nach Anspruch 4, bei dem die wäßrige Mischung die folgende molare Zusammensetzung hat:

| | |
|---|---|
| $XO_2/Y_2O_3$ | 120 bis 300 |
| $Q/XO_2$ | 0,05 bis 4,0 |
| $M^1OH/XO_2$ | 0,08 bis 1,0 |
| $M^2Z/XO_2$ | 0 bis 2,0 |
| $H_2O/XO_2$ | 20 bis 60 |

10. Verfahren nach Anspruch 4, bei dem die wäßrige Mischung die folgende molare Zusammensetzung hat:

| | |
|---|---|
| $XO_2/Y_2O_3$ | 300 bis 500 |
| $Q/XO_2$ | 0,02 bis 4,0 |
| $M^1OH/XO_2$ | 0 bis 1,0 |
| $M^2Z/XO_2$ | 0 bis 2,0 |
| $H_2O/XO_2$ | 10 bis 70 |

11. Verfahren nach einem der Ansprüche 4 bis 10, bei dem das Polyamin Triethylentetramin, Tetraethylenpentamin oder N,N-Diethylethylendiamin ist.

12. Katalysator, der aus einem synthetischen Zeolithmaterial nach einem der Ansprüche 1 bis 3 besteht.

13. Katalytisches Verfahren, bei dem der Katalysator nach Anspruch 12 verwendet wird.

**Revendications**

1. Zéolite de synthèse ayant une composition molaire exprimée par la formule ci-après:

$$0,1 \text{ à } 7,5\ M_2O:0,2 \text{ à } 2,5\ Y_2O_3:100\ XO_2:0 \text{ à } 50\ H_2O$$

dans laquelle M est un cation monovalent ou 1/n d'un cation de valence n, X est un atome de silice ou de germanium, Y est un atome d'aluminium, de fer, de chrome, de vanadium, de molybdène, d'arsenic, d'antimoine, de manganèse, de gallium ou de bore et $H_2O$ est de l'eau d'hydratation s'ajoutant à l'eau éventuellement présente lorsque M est un atome d'hydrogène, et présentant le spectre de rayons X suivant:

| Zéolite Nu-4 Exemple 3 dA | (telle que préparée) 100 $I/I_o$ | Zéolite Nu-4 Exemple 4 dA | (forme H calcinée) 100 $I/I_o$ |
|---|---|---|---|
| 11,3 | 16 | — | — |
| 11,1 | 20 | 11,07 | 33 |
| 10,08 | 15 | 10,07 | 36 |
| 9,90 | 6 | 9,96 | 10 |
| 9,77 | 6 | 9,79 | 10 |
| — | — | 9,28 | 1 |
| 9,05 | 1 | 9,02 | 1.5 |
| — | — | 8,08 | 1 |
| 7,50 | 2 | 7,45 | 4 |
| 7,09 | 1 | 7,09 | 2 |
| 6,78 | 2 | 6,72 | 4 |
| 6,44 | 5 | 6,38 | 8 |
| 6,07 | 4 | 6,08 | 5 |
| 6,05 | 5 | 6,02 | 7 |
| 5,97 | 1 | 5,99 | 7 |
| 5,75 | 8 | 5,73 | 9 |
| 5,65 | 6 | 5,57 | 8 |
| 5,63 | 2 | — | — |
| 5,41 | 2 | 5,38 | 2 |
| 5,19 | 2 | 5,15 | 4 |
| 5,07 | 2 | 5,04 | 3 |
| 5,01 | 4 | 5,005 | 5 |
| 4,919 | 1 | 4,899 | 1 |
| — | — | 4,725 | 1 |
| 4,629 | 9 | 4,610 | 9 |
| 4,558 | 1 | 4,900 | 1 |
| 4,495 | 2 | 4,490 | 1 |
| 4,475 | 2 | 4,470 | 2 |
| 4,386 | 13 | 4,380 | 14 |

| Zéolite Nu-4 Exemple 3 dA | Zéolite Nu-4 (telle que préparée) 100 $I/I_o$ | Zéolite Nu-4 Exemple 4 dA | Zéolite Nu-4 (forme H calcinée) 100 $I/I_o$ |
|---|---|---|---|
| 4,291 | 10 | 4,280 | 13 |
| 4,124 | 13 | 4,103 | 3 |
| 4,104 | 4 | — | — |
| 4,039 | 6 | 4,022 | 7 |
| 3,950 | 1 | 3,950 | 2 |
| 3,890 | 100 | — | — |
| 3,850 | 69 | 3,869 | 100 |
| — | — | 3,836 | 73 |
| 3,743 | 51 | 3,764 | 35 |
| 3,730 | 50 | 3,735 | 54 |
| 3,676 | 27 | 3,662 | 29 |
| 3,649 | 22 | 3,604 | 4 |
| 3,629 | 5 | — | — |
| — | — | 3,500 | 5 |
| 3,466 | 12 | 3,469 | 10 |
| 3,364 | 6 | 3,368 | 7 |
| 3,332 | 9 | 3,342 | 10 |
| 3,329 | 4 | — | — |
| 3,273 | 4 | 3,265 | 3 |
| 3,267 | 4 | — | — |
| 3,260 | 4 | 3,260 | 12 |

1Å=0,1 nm

2. Zéolite de synthèse suivant la revendication 1, ayant une composition molaire exprimée par la formule ci-après:

$$0,1 \text{ à } 7,5\ M_2O:0,5 \text{ à } 2\ Y_2O_3:100\ XO_2:0 \text{ à } 50\ H_2O.$$

3. Zéolite de synthèse suivant la revendication 1 ou la revendication 2, caractérisée en ce que M est ou comprend de l'hydrogène.

4. Procédé de fabrication d'une zéolite de synthèse suivant la revendication 1, selon lequel on fait réagir un mélange aqueux contenant au moins un oxyde $XO_2$, au moins un oxyde $Y_2O_3$ et au moins une polyalcoylène polyamine représentée par la formule ci-après:

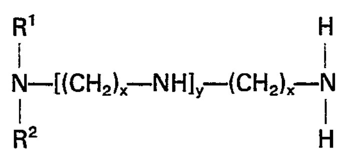

dans laquelle chacun des radicaux $R^1$ et $R^2$ est indépendamment un atome d'hydrogène ou un groupe alcoyle en $C_{1-6}$, x est un nombre entier de 2 à 6 et y est un nombre entier de 0 à 10, à condition que dans le cas où y est 0 et $R^1$ et $R^2$ sont tous les deux des groupes alcoyles, x est 2 à 5 et que, dans le cas où y est 0 et $R^1$ et $R^2$ ne sont pas tous les deux des groupes alcoyles, x est 4 ou 5 et caractérisé en ce que le mélange aqueux a la composition molaire suivante:

| | |
|---|---|
| $XO_2/Y_2O_3$ | 40 à 1000 |
| $Q/XO_2$ | 0,01 à 4,0 |
| $M^1OH/XO_2$ | 0 à 2,0 |
| $H_2O/XO_2$ | 10 à 200 |
| $M^2Z/XO_2$ | 0 à 4,0 |

dans laquelle X et Y sont tels que définis dans la revendication 1, $M^1$ est un métal alcalin éventuellement avec l'ammonium et/ou l'hydrogène, $M^2$ est un métal alcalin, un groupe ammonium ou de l'hydrogène, Q est la polyalcoylène polyamine et Z est un radical d'acide fort.

5. Procédé suivant la revendication 4, caractérisé en ce que le mélange aqueux à la composition molaire suivante:

| | |
|---|---|
| $XO_2/Y_2O_3$ | 40 à 70 |
| $Q/XO_2$ | 0,1 à 4,0 |
| $M^1OH/XO_2$ | 0 à 1,0 |
| $H_2O/XO_2$ | 15 à 45 |
| $M^2Z/XO_2$ | 0 à 2,0 |

6. Procédé suivant la revendication 4, caractérisé en ce que le mélange aqueux a la composition molaire suivante:

| | |
|---|---|
| $XO_2/Y_2O_3$ | 70 à 120 |
| $Q/XO_2$ | 0,1 à 4,0 |
| $M^1OH/XO_2$ | 0,04 à 1,0 |
| $H_2O/XO_2$ | 20 à 30 |
| $M^2Z/XO_2$ | 0 à 2,0 |

7. Procédé suivant la revendication 4, caractérisé en ce que le mélange aqueux a la composition molaire suivante:

| | |
|---|---|
| $XO_2/Y_2O_3$ | 70 à 120 |
| $Q/XO_2$ | 0,1 à 4,0 |
| $M^1OH/XO_2$ | 0,1 à 1,0 |
| $H_2O/XO_2$ | 30 à 40 |
| $M^2Z/XO_2$ | 0 à 2,0 |

8. Procédé suivant la revendication 4, caractérisé en ce que le mélange aqueux a la composition molaire suivante:

| | |
|---|---|
| $XO_2/Y_2O_3$ | 70 à 120 |
| $Q/XO_2$ | 0,1 à 4,0 |

| | |
|---|---|
| $M^1OH/XO_2$ | 0,18 à 1,0 |
| $H_2O/XO_2$ | 40 à 60 |
| $M^2Z/XO_2$ | 0 à 2,0 |

9. Procédé suivant la revendication 4, caractérisé en ce que le mélange aqueux a la composition molaire suivante:

| | |
|---|---|
| $XO_2/Y_2O_3$ | 120 à 300 |
| $Q/XO_2$ | 0,05 à 4,0 |
| $M^1OH/XO_2$ | 0,08 à 1,0 |
| $H_2O/XO_2$ | 20 à 60 |
| $M^2Z/XO_2$ | 0 à 2,0 |

10. Procédé suivant la revendication 4, caractérisé en ce que le mélange aqueux a la composition molaire suivante:

| | |
|---|---|
| $XO_2/Y_2O_3$ | 300 à 500 |
| $Q/XO_2$ | 0,02 à 4,0 |
| $M^1OH/XO_2$ | 0 à 1,0 |
| $H_2O/XO_2$ | 10 à 70 |
| $M^2Z/XO_2$ | 0 à 2,0 |

11. Procédé suivant l'une quelconque des revendications 4 à 10, caractérisé en ce que la polyamine est la triéthylènetétramine, la tétraéthylènepentamine ou la N,N-diéthyléthylène diamine.

12. Catalyseur caractérisé en ce qu'il comprend une zéolite de synthèse suivant l'une quelconque des revendications 1 à 3.

13. Procédé catalytique, caractérisé en ce qu'il met en oeuvre le catalyseur suivant la revendication 12.